# EUROPÄISCHE PATENTSCHRIFT

(11) **EP 1 710 148 B1**
(45) Veröffentlichungstag und Bekanntmachung des Hinweises auf die Patenterteilung: **19.03.2008**
(21) Anmeldenummer: 06002892.5
(22) Anmeldetag: 14.02.2006
(51) Int. Cl.: B62D 6/02, B66F 9/075

(54) **Lenksystem für ein Flurförderzeug**
Steering system for a floor conveyor
Système de direction pour un chariot de manutention

(30) Priorität: 06.04.2005 DE 102005015673
(43) Veröffentlichungstag der Anmeldung: 11.10.2006
(73) Patentinhaber: Jungheinrich Aktiengesellschaft, 22047 Hamburg (DE)
(72) Erfinder: Mänken, Frank, Dr.-Ing., 24558 Henstedt-Ulzburg (DE); Schröder, Henrik, Dipl.-Ing., 21423 Winsen-Roydorf (DE)
(74) Vertreter: Hauck Patent- und Rechtsanwälte

(56) Entgegenhaltungen:
- DE-A1- 10 008 984

## Beschreibung

Die Erfindung bezieht sich auf ein Lenksystem für ein Flurförderzeug nach dem Oberbegriff des Patentanspruchs 1.

Ein Flurförderzeug ist typischerweise so ausgelegt, daß es im Rangierbetrieb, d.h. bei niedrigen Fahrgeschwindigkeiten dynamisch bewegbar ist. Hierzu gehört eine möglichst hohe Verstellgeschwingkeit der Lenkung. Bei hohen Fahrgeschwindigkeiten während der Transportfahrt besteht durch eine schnell- und leichtgängig arbeitende Lenkung etwa mit elektrischen oder elektrohydraulischen Lenkgetrieben die Gefahr, daß das Fahrzeug seitlich kippt, insbesondere bei Kurvenfahrt. Bei einer Hinterradlenkung tritt diese Gefahr insbesondere bei Vorwärtsfahrt und bei einer Vorderradlenkung bei Rückwärtsfahrt auf. Flurförderzeuge bewegen sich üblicherweise sowohl in Vorwärts- als auch in Rückwärtsrichtung mit gleich hoher Geschwindigkeit. Verstärkt wird ein solcher Effekt durch eine direkte Lenkung, wie sie vor allem bei Lenkelementen wie Joysticks oder Lenkräder mit geringem Drehwinkel (weniger als 360°) vorliegt.

Aus EP 0 596 167 ist bekannt geworden, die Übersetzung zwischen Lenkrad und Lenkmotor variabel zu machen, und zwar in Abhängigkeit von der Geschwindigkeit des Flurförderzeugs. Die Lenkung wird um so "indirekter", je größer die Geschwindigkeit ist. Dadurch soll ein stabiles Fahrverhalten erzielt werden. Aus EP 0 722 878 ist bekannt geworden, die Übersetzung nicht nur entlang einer vorgegebenen Kennlinie in Abhängigkeit von der Fahrgeschwindigkeit zu ändern, sondern in einer Steuervorrichtung eine Kennlinienschar abzulegen, um das Übersetzungsverhältnis bzw. die Übersetzungskennlinie wählbar zu gestalten, z.B. nach Erfahrung und Geschicklichkeit des Fahrers einzustellen.

Aus DE 100 08 984, das den Oberbegriff des Anspruchs 1 bildet, ist bekannt geworden, die Lenkbewegung des lenkbaren Rades von der Fahrgeschwindigkeit abhängig zu machen. Aus diesem Stand der Technik ist ferner bekannt, die Lenkbewegung von der Masse und/oder der Hubhöhe einer mit dem Flurförderzeug aufgenommenen Last zu ändern.

Der Erfindung liegt die Aufgabe zugrunde, ein Lenksystem für Flurförderzeuge zu schaffen, bei dem Kippsicherheit und Manövrierfähigkeit optimiert sind.

Diese Aufgabe wird durch die Merkmale des Patentanspruchs 1 gelöst.

Bei dem erfindungsgemäßen Lenksystem sind Mittel vorgesehen, um die Lenkrichtung des gelenkten Rades zu bestimmen. Die Lenkrichtung kann z.B. aus dem zeitlichen Verlauf des Signals eines Winkelsensors an einem gelenkten Rad ermittelt werden. Auch die Verwendung des Signals eines Winkelsensors am Lenkrad oder ähnlichem ist denkbar.

Bei dem erfindungsgemäßen Lenksystem ist ferner vorgesehen, daß die Lenkgeschwindigkeit bei Fahrt in Richtung des gelenkten Rades beim Einlenken in eine Kurve kleiner ist als beim Herauslenken aus einer Kurve. Umgekehrt ist die Lenkgeschwindigkeit bei Fahrt entgegen der Richtung des gelenkten Rades aus einer Kurve kleiner als beim Einlenken in eine Kurve.

Bei dem erfindungsgemäßen Lenksystem ist ein Kompromiß zwischen dem Gewinn an seitlicher Kippsicherheit und dem Verlust an Fahrzeugdynamik erzielt. So ist z.B. erforderlich, bei plötzlich auftauchenden Hindernissen auszuweichen. Daher wird bei dem erfindungsgemäßen Lenksystem die Lenkgeschwindigkeit nur in den Fällen speziell reduziert, die eine besonders hohe Gefahr des seitlichen Kippens beinhalten. Dies ist bei Gegengewichtsstaplern bei Vorwärtsfahrt das Herauslenken aus einer Kurve (Lenkrichtung in Richtung der Geradeausstellung) und bei Rückwärtsfahrt das Hineinlenken in eine Kurve (Lenkrichtung von der Geradeausstellung in Richtung eines Anschlages) der Fall.

Das erfindungsgemäße Lenksystem kommt ohne Sensoren für fahrdynamische Größen aus. Es ist lediglich erforderlich, Fahrtrichtung und Richtung der Lenkbetätigung zu sensieren. Die Fahrtrichtung läßt sich aus dem elektrischen Antrieb, der üblicherweise einen Asynchronmotor beinhaltet, ableiten. Von diesem läßt sich im übrigen auch ein Signal für Fahrgeschwindigkeit ableiten, wenn, wie an sich bekannt, die Lenkgeschwindigkeit von der Fahrgeschwindigkeit abhängig gemacht wird, indem die Lenkgeschwindigkeit mit steigender Fahrgeschwindigkeit verringert wird.

Nach einer Ausgestaltung der Erfindung ist vorgesehen, daß eine Verringerung der Lenkgeschwindigkeit erst oberhalb einer vorgegebenen Fahrgeschwindigkeit erfolgt. Unterhalb eines solchen Wertes kann z.B. mit maximaler Lenkgeschwindigkeit operiert werden.

Bei dem erfindungsgemäßen Lenksystem kann die Verringerung der Lenkgeschwindigkeit zusätzlich von der Masse und/oder Hubhöhe der aufgenommenen Last abhängig gemacht werden.

Die Erfindung soll nachfolgend anhand eines Ausführungsbeispiels näher erläutert werden.

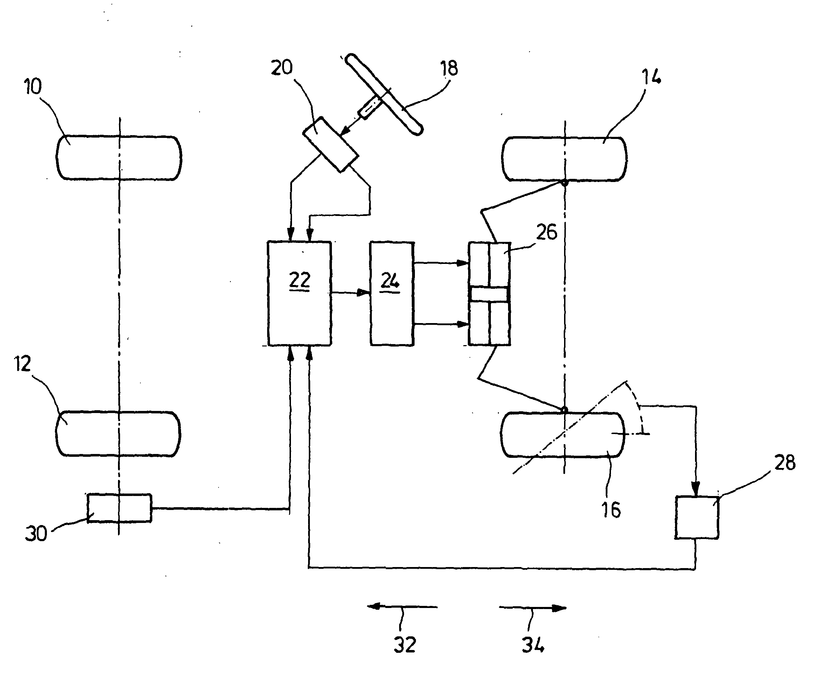

Die einzige Figur zeigt schematisch ein Blockdiagramm eines Lenksystems nach der Erfindung.

In der einzigen Figur sind die vier Räder 10 bis 16 eines Vierradflurförderzeugs, beispielsweise eines Gegengewichtsstaplers dargestellt, wobei die Räder 14, 16 die lenkbaren Hinterräder des Gegengewichsstaplers darstellen. Die nachfolgenden Erläuterungen gelten jedoch auch für Flurförderzeuge mit Vorderradantrieb. Die übrigen Teile, insbesondere der Aufbau des Flurförderzeugs sind nicht dargestellt.

Bei 18 ist ein Lenkrad dargestellt, das auf einen Winkelgeber 20 wirkt, der nach Maßgabe des Drehwinkels des Lenkrads 18 ein Signal erzeugt für eine elektronische Steuervorrichtung 22. Die elektronische Steuervorrichtung 22 erzeugt ein Signal für eine hydraulische Steuerventilanordnung 24, die einen Verstellzylinder 26 zum Lenken der Räder 14, 16 betätigt. Ein Lenkwinkelgeber 28 mißt den Lenkausschlag der Räder 14, 16 und gibt ein Signal auf die Steuervorrichtung 22. Ein Geschwindigkeitsgeber 30 mißt die Fahrgeschwindigkeit des Fahrzeugs, wobei aus dem Vorzeichen des Signals des Geschwindigkeitsgebers 30 zugleich die Fahrtrichtung des Fahrzeugs in der elektronischen Steuervorrichtung ermittelt wird. Der Pfeil 32 gibt die Vorwärtsfahrt und der Pfeil 34 die Rückwärtsfahrt des Gegengewichtsstaplers an. Über den Winkelgeber 20 wird außerdem ein weiteres Signal in die elektronische Steuervorrichtung gegeben, welches die Lenkrichtung in Bezug auf die Geradeausfahrt anzeigt. Entweder fährt das Fahrzeug von der Geradeausfahrt in eine Kurve oder aus einer Kurve wieder in die Geradeausfahrt. Dieses Signal ist für die Einstellung der Lenkgeschwindigkeit maßgebend, wie nachfolgend erläutert werden soll.

Die elektronische Steuervorrichtung 22 kann so ausgelegt sein, daß die Lenkgeschwindigkeit mit zunehmender Fahrgeschwindigkeit kleiner wird, um eine sichere Geradeausfahrt zu erzielen. Außerdem ist die elektronische Steuervorrichtung 22 so ausgelegt, daß bei einer Fahrt in Richtung Pfeil 32 (Vorwärtsfahrt) die Lenkgeschwindigkeit beim Herauslenken aus einer Kurve geringer ist als beim Einlenken in einer Kurve. Umgekehrt ist bei einer Fahrt in Richtung Pfeil 34 (Rückwärtsfahrt) die Lenkgeschwindigkeit beim Einlenken in eine Kurve geringer als beim Herauslenken aus einer Kurve. Dadurch werden besonders kritische Zustände beim Durchfahren von Kurven durch das Flurförderzeug vermieden.

Es versteht sich, daß das beschriebene System besonders vorteilhaft ist, wenn eine sehr direkte Lenkung vorgesehen ist, das Lenkrad z.B. einen Drehwinkel von kleiner 360° oder sogar kleiner als 120° zu beiden Seiten aufweist. Das beschriebene System kann im übrigen auch ergänzt werden durch eine fahrgeschwindigkeitsabhängige Änderung der Lenkübersetzung. Schließlich kann die Änderung der Lenkgeschwindigkeit und/oder die Lenkübersetzung von der Hubhöhe und der Masse einer aufgenommenen Last abhängig gemacht werden.

## Patentansprüche

1. Lenksystem für ein Flurförderzeug mit mindestens einem lenkbaren Rad, das über einen Lenkgeber und einer von dem Lenkgeber betätigten elektrischen oder elektrohydraulischen Lenkvorrichtung lenkbar ist, wobei die Lenkgeschwindigkeit des lenkbaren Rades beeinflußbar ist, **dadurch gekennzeichnet, daß** Mittel (20) vorgesehen sind zur Bestimmung der Lenkrichtung des gelenkten Rades (14, 16) und die Lenkgeschwindigkeit bei Fahrt in Richtung des gelenkten Rades (14, 16) beim Einlenken in eine Kurve kleiner ist als beim Herauslenken aus einer Kurve und/oder die Lenkgeschwindigkeit bei Fahrt entgegen der Richtung des gelenkten Rades (14, 16) aus einer Kurve kleiner ist als beim Einlenken in eine Kurve.

2. Lenksystem nach Anspruch 1, **dadurch gekennzeichnet, daß** die Verringerung der Lenkgeschwindigkeit oberhalb einer vorgegebenen Fahrgeschwindigkeit erfolgt.

3. Lenksystem nach Anspruch 2, **dadurch gekennzeichnet, daß** die Verringerung der Lenkgeschwindigkeit mit zunehmender Fahrgeschwindigkeit größer wird.

4. Lenksystem nach einem der Ansprüche 1 bis 3, **dadurch gekennzeichnet, daß** die Verringerung der Lenkgeschwindigkeit von der Masse und/oder Hubhöhe der aufgenommenen Last abhängig ist.

5. Lenksystem nach einem der Ansprüche 1 bis 4, **dadurch gekennzeichnet, daß** der Lenkgeber einen Drehwinkel von kleiner 360° aufweist.

## Claims

1. A steering system for a floor conveyor with at least one steerable wheel, which is steerable via a steering transmitter and an electric or electro-hydraulic steering device actuated by the steering transmitter, wherein the steering speed of the steerable wheel can be influenced, **characterised in that** means (20) are provided for the determination of the steering direction of the steered wheel (14, 16), and when travelling in the direction of the steered wheel (14, 16), the steering speed is smaller when entering into a curve than when leaving a curve, and/or when travelling against the direction of the steered wheel (14, 16), the steering speed is smaller when leaving a curve than when entering into a curve.

2. A steering system according to claim 1, **characterised in that** the reduction of the steering speed takes place above a preset travelling speed.

3. A steering system according to claim 3, **characterised in that** the reduction of the steering speed becomes greater with increasing travelling speed.

4. A steering system according to any one of claims 1 to 3, **characterised in that** the reduction of the travelling speed is depending on the mass and/or the lifting height of the load which is taken up.

5. A steering system according to any one of claims 1 to 3, **characterised in that** the steering transmitter has a rotational angle of less than 360°.

## Revendications

1. Système d'orientation pour un chariot de manutention au sol comportant au moins une roue orientable, qui peut être orientée par un indicateur d'orientation et un dispositif d'orientation électrique ou électro-hydraulique actionné par l'indicateur d'orientation, avec possibilité d'action sur la vitesse d'orientation de la roue orientable, **caractérisé en ce que** des moyens (20) sont prévus pour déterminer la direction d'orientation de la roue orientée (14, 16) et la vitesse d'orientation, en cas de déplacement dans le sens opposé à la roue orientée (14, 16), avec orientation d'entrée dans une courbe, est plus petite qu'avec orientation de sortie d'une courbe, et/ou **en ce que** la vitesse d'orientation, en cas de déplacement dans le sens opposé à la direction de la roue orientée (14, 16) en sortant d'une courbe est plus petite qu'en cas d'une orientation pour entrer dans une courbe.

2. Système d'orientation suivant la revendication 1, **caractérisé en ce que** la réduction de la vitesse d'orientation a lieu au-dessus d'une vitesse de déplacement prédéfinie.

3. Système d'orientation suivant la revendication 2, **caractérisé en ce que** la réduction de la vitesse d'orientation devient plus grande lorsque la vitesse de déplacement augmente.

4. Système d'orientation suivant l'une des revendications 1 à 3, **caractérisé en ce que** la réduction de la vitesse d'orientation dépend de la masse et/ou de la hauteur de levage de la charge soulevée.

5. Système d'orientation suivant l'une des revendications 1 à 4, **caractérisé en ce que** l'indicateur d'orientation présente un angle de rotation de moins de 360°.
